Europäisches Patentamt

European Patent Office

Office européen des brevets

(19)

(11) **EP 0 907 523 B1**

(12) **EUROPÄISCHE PATENTSCHRIFT**

(45) Veröffentlichungstag und Bekanntmachung des Hinweises auf die Patenterteilung:
**12.07.2000 Patentblatt 2000/28**

(51) Int Cl.⁷: **B60K 41/04**

(21) Anmeldenummer: **97921618.1**

(86) Internationale Anmeldenummer:
**PCT/DE97/00776**

(22) Anmeldetag: **18.04.1997**

(87) Internationale Veröffentlichungsnummer:
**WO 98/00307 (08.01.1998 Gazette 1998/01)**

(54) **SYSTEM ZUR EINSTELLUNG EINER GETRIEBEÜBERSETZUNG**

SYSTEM FOR ADJUSTING A GEAR RATIO

SYSTEME POUR AJUSTER LE RAPPORT DE DEMULTIPLICATION D'UNE BOITE DE VITESSES

(84) Benannte Vertragsstaaten:
**DE ES FR GB IT**

(30) Priorität: **28.06.1996 DE 19625936**

(43) Veröffentlichungstag der Anmeldung:
**14.04.1999 Patentblatt 1999/15**

(73) Patentinhaber: **ROBERT BOSCH GMBH**
**70442 Stuttgart (DE)**

(72) Erfinder:
 • **BOLZ, Martin-Peter**
  **D-71720 Oberstenfeld (DE)**
 • **HÜLSER, Holger**
  **D-70469 Stuttgart (DE)**

(56) Entgegenhaltungen:
 **EP-A- 0 602 672      WO-A-93/00535**
 **WO-A-95/20114       US-A- 4 893 526**

 • **WELTER ET AL: "Die Adaptive Getriebesteuerung für die Automatikgetriebe der BMW Fahrzeuge...." ATZ AUTOMOBILTECHNISCHE ZEITSCHRIFT., Bd. 94, Nr. 9, September 1992, STUTTGART DE, Seiten 428-436, XP002001206 in der Anmeldung erwähnt**

**Beschreibung**

Stand der Technik

Die Erfindung geht aus von einem System zur Einstellung einer Getriebeübersetzung mit den Merkmalen des Oberbegriffs des Anspruchs 1.

Aus dem Stand der Technik sind viele Möglichkeiten bekannt, die Übersetzung eines Kraftfahrzeuggetriebes zur Einstellung einer bestimmten Solldrehzahl des Fahrzeugmotors vorzunehmen. So wird in der US 4,893,526 aus der Fahrzeugslängsgeschwindigkeit und der Stellung des vom Fahrer betätigten Fahrpedals ein Sollabtriebsmoment bestimmt, woraufhin abhängig von dem Sollabtriebsmoment und der Fahrzeugslängsgeschwindigkeit ein Sollwert für die Motordrehzahl ermittelt wird. Dieser Sollwert für die Motordrehzahl wird durch die Verstellung eines kontinuierlich verstellbaren Fahrzeuggetriebes eingestellt. Darüber hinaus wird das Sollabtriebsmoment sowie die eingestellte Getriebeübersetzung zur Einstellung des Motormoments herangezogen. In dem Artikel VDI-Zeitschrift, Spezial "Antriebstechnik", NR. 134, März 1992, S. 26 - 49 wird beschrieben, eine gewünschte Motordrehzahl abhängig vom Drosselklappenwinkel des Fahrzeugmotors zu ermitteln. Diese gewünschte Motordrehzahl wird durch eine Verstellung eines kontinuierlich verstellbaren Getriebes eingestellt. Darüber hinaus wird in diesem Artikel beschrieben, die gewünschte Motordrehzahl auch abhängig von unterschiedlichen Fahrprogrammen zu wählen. Solche Fahrprogramme tragen der Fahrereigenschaft Rechung, wobei die Fahrereigenschaft durch einen eher verbrauchsoptimierten oder einen eher fahrleistungsorientierten Fahrstil des Fahrers repräsentiert wird. Der WO 94/24465 ist ein Verfahren zur Übersetzungseinstellung eines Getriebes zu entnehmen, bei dem die Übersetzung eines kontinuierlich verstellbaren Getriebes derart getätigt wird, daß Betriebspunkte des Schaltkennfeldes zwischen einer Kennlinie des optimierten Verbrauchs und einer Kennlinie der optimierten Leistung angenommen werden. Eine über die Fahrpedalstellung hinausgehende Abhängigkeit der Sollmotordrehzahl ist diesem Stand der Technik nicht zu entnehmen.

Die WO 93/00535 A zeigt eine Getriebesteuerung, bei der eine Soll-Drehzahl des Fahrzeugmotors bestimmt wird und abhängig von der bestimmten Soll-Drehzahl des Fahrzeugmotors die Übersetzung des Getriebes eingestellt wird. Hierzu wird eine die Fahrsituation und/oder den Fahrzustand beeinflussende oder repräsentierende erste Größe und eine die Momenten- und/oder Leistungsforderung und/oder eine die Fahrereigenschaft beeinflussende oder repräsentierende weitere Größe ermittelt.

Die Aufgabe der vorliegenden Erfindung besteht darin, die durch eine Verstellung der Getriebeübersetzung einzustellende Motordrehzahl an die jeweilige Fahrsituation bzw. den jeweiligen Fahrzustand optimal anzupassen.

Diese Aufgabe wird durch die kennzeichnenden Merkmale des Anspruchs 1 gelöst.

Vorteile der Erfindung

Wie erwähnt geht die Erfindung aus von einem System zur Einstellung eines in seiner Übersetzung veränderbaren Kraftfahrzeuggetriebes, bei dem eine Solldrehzahl des Fahrzeugmotors bestimmt wird. Abhängig von dieser Solldrehzahl wird dann die Übersetzung des Getriebes eingestellt. Hierzu wird wenigstens eine die Fahrsituation und/oder den Fahrzustand beeinflussende oder repräsentierende Größe ermittelt und die Bestimmung der Solldrehzahl des Fahrzeugmotors abhängig von dieser Größe getätigt.

Neben dieser Abhängigkeit der Sollmotordrehzahl von der Fahrsituation bzw. dem Fahrzustand hinaus wird die Sollmotordrehzahl weiterhin abhängig von einer Größe bestimmt werden, die die Momenten- und/oder Leistungsforderung repräsentiert. Die Momenten- und/oder Leistungsforderung kann zum einen durch den Fahrerwunsch (Stellung des Fahrpedals) angegeben werden und/oder andererseits durch den Momenten- bzw. Leistungsbedarf von Nebenaggregaten (z. B. Klimaanlage) beeinflußt werden. Bei einer Ausgestaltung der Erfindung ist daran gedacht, daß die Sollmotordrehzahl auch abhängig von der Fahrereigenschaft bestimmt wird. Auch die Bestimmung der Fahrereigenschaft, die einem verbrauchs- oder fahrleistungsorientierten Fahrverhalten des Fahrers Rechnung trägt, ist an sich aus dem Stand der Technik bekannt. Der Kern dieser Erfindungsvariante besteht also darin, daß eine optimale Motordrehzahl als Führungsgröße, die das Getriebe einstellen soll, bestimmt wird aus

1. der Fahrereigenschaft (z. B. sportliches oder ökonomisches Fahrverhalten)

2. der Fahrsituation (z. B. Stadtbetrieb, Stop-and-Go, Fahren unter erhöhter Last, Bergabfahrt)

3. dem Fahrzeugzustand (z. B. Warmlauf des Fahrzeugmotors).

Insbesondere ist daran gedacht, daß diese optimale Motordrehzahl unabhängig von der Fahrzeuglängsgeschwindigkeit bestimmt wird.

Dazu ist erfindungsgemäß vorgesehen, daß zur Bestimmung der Sollmotordrehzahl in einem ersten Schritt eine erste Solldrehzahl abhängig von der erfaßten Momenten- und/oder Leistungsforderung und der ermittelten Fahrereigenschaft (ökonomisch oder sportlich) bestimmt wird. In einem weiteren Schritt wird diese erste Solldrehzahl abhängig von der die Fahrsituation beeinflussenden oder repräsentierende Größe modifiziert. Darüber hinaus ist dann vorgesehen, daß die so ermittelte Solldrehzahl abhängig von der den Fahrzustand beeinflussenden oder repräsentierenden Größe begrenzt wird. Der Grundgedanke der Erfindung besteht also darin, zunächst eine optimale Motordrehzahl als Funktion der Fahrereigenschaft (mehr verbrauchs- oder mehr fahrleistungsorientiert) zu bestimmen und diese dann durch die Fahrsituation, den Fahrzeugzustand oder durch Forderung von Nebenaggregaten zu modifizieren. So kann beispielsweise bei einer Fahrt bergab zur Erhöhung des Schleppmoments eine höhere Motordrehzahl optimal sein. Zusätzlich kann beispielsweise im Warmlauf des Fahrzeugmotors die Mindestdrehzahl, die über die Getriebeübersetzung am Motor eingestellt wird, einen höheren Wert haben als bei einem betriebswarmen Motor. Analog kann beispielsweise im Stadtbetrieb die Motordrehzahl durch die Getriebeübersetzung auf ein maximalen Wert begrenzt werden, wodurch die Fahrzeuggeräusche und die Abgasemission des Fahrzeugs reduziert werden. Zudem kann beispielsweise ein Nebenaggregat wie die Lichtmaschine oder eine Klimaanlage eine erhöhte Motordrehzahl auch außerhalb des Leerlaufs anfordern, die durch eine entsprechende Getriebeübersetzung einzustellen ist.

Durch das erfindungsgemäße System ist es möglich, das Fahrverhalten des Fahrzeugs optimal an die vorliegende Fahrsituation bzw. den vorliegenden Fahrzustand anzupassen. Zur Ermittlung der vorliegenden Fahrsituation kann festgestellt werden, ob ein Stadtfahrbetrieb, ein Stop-and-Go-Fahrbetrieb, ein Fahrbetrieb mit erhöhtem Schlupf (z.B. auf Eis/Schnee), ein Fahrbetrieb unter erhöhter Last, beispielsweise eine Bergauffahrt, und/oder eine Bergabfahrt vorliegt. Zur Charakterisierung des Fahrzustands kann beispielsweise ein Warmlaufbetrieb des Fahrzeugmotors ermittelt werden. Die Erfassung solcher Fahrsituationsgrößen bzw. Fahrzustandsgrößen an sich ist bekannt. Hierzu soll beispielhaft auf den Artikel ATZ Automobiltechnische Zeitschrift 94 (1992) 9, Seiten 428 bis 436 verwiesen werden.

Besonders vorteilhaft ist es, die erfindungsgemäß bestimmte Sollmotordrehzahl durch die aktuelle Getriebeabtriebsdrehzahl, die der Fahrzeuglängsgeschwindigkeit proportional ist, zu dividieren, um daraus die optimale Getriebeübersetzung zu bestimmen.

Weiterhin trägt die Erfindung unterschiedlichen Betriebsbereichen des Fahrzeugs Rechnung. Diese Betriebsbereiche sind dadurch bestimmt, daß die Momenten- und/oder Leistungsforderung im Fahrzeugzugbetrieb positive und im Fahrzeugschubbetrieb negative Werte annimmt. Weiterhin ist jeder Getriebeübersetzung ein maximal bzw. minimal mögliches Moment oder eine maximal oder minimal mögliche Leistung zuzuordnen.

Liegt ein Fahrzeugzugbetrieb mit geringer Momentenanforderung vor, so ist die Momenten- bzw. Leistungsforderung positiv und unterhalb des bei der momentan eingestellten Getriebeübersetzung möglichen maximalen Wertes. In diesem Fall wird die erfindungsgemäß bestimmte Solldrehzahl des Motors im wesentlichen konstant gehalten und eine Änderung der Momenten- bzw. Leistungsforderung im wesentlichen durch eine Änderung des Motormoments getätigt.

Liegt ein Fahrzeugzugbetrieb mit hoher Momentenanforderung vor, so ist die Momenten- bzw. Leistungsforderung positiv und oberhalb des bei der momentan eingestellten Getriebeübersetzung maximalen Wertes. In diesem Fall muß die Getriebeübersetzung erhöht werden, während das Motormoment im wesentlichen auf den maximalen Wert eingestellt wird.

Liegt ein Schubbetrieb mit geringer negativer Momentenforderung vor, so bedeutet dies, daß die Momenten- bzw. Leistungsforderung negativ und oberhalb des bei der momentan eingestellten Getriebeübersetzung minimalen Wertes ist. In diesem Fall bleibt die erfindungsgemäß bestimmte Motordrehzahl im wesentlichen konstant und eine Änderung der Momenten- bzw. Leistungsforderung wird im wesentlichen durch eine Änderung des Motormoments getätigt.

Ein Fahrzeugschubbetrieb mit hoher negativer Momentenforderung liegt dann vor, wenn die Momenten- bzw. Leistungsforderung negativ ist und unterhalb des bei der momentan eingestellten Getriebeübersetzung minimal möglichen Wertes liegt. In diesem Fall wird die Getriebeübersetzung in Richtung auf die minimal erlaubte Übersetzung eingestellt.

Die anhand der unterschiedlichen Betriebszustände beschriebene Triebstrangstrategie beinhaltet also, daß die erfindungsgemäße Motordrehzahl im wesentlichen konstant gehalten wird, wobei nur dann von dieser Konstanthaltung abgewichen wird, wenn die Momenten- bzw. Leistungsforderungen des Fahrers und/oder der Nebenaggregate dies unbedingt erforderlich machen.

Die oben benutzte Formulierung, daß die Sollmotordrehzahl im wesentlichen konstant gehalten wird, beinhaltet dabei erfindungsgemäß auch ein kurzfristiges Abweichen von dieser Sollmotordrehzahl dann, wenn eine Änderung der Momenten- bzw. Leistungsforderung ermittelt wird. Mittel- bzw. langfristig wird aber, soweit dies innerhalb der Maximal- bzw. Minimalgrenzen möglich ist, die Sollmotordrehzahl erfindnungsgemäß auf den optimalen Wert konstant gehalten.

Neben der Verwendung eines kontinuierlich in seiner Übersetzung verstellbaren Getriebes kann auch vorgesehen sein, daß das Getriebe diskrete Getriebeübersetzungsstufen aufweist. Das bisher beschriebene erfindungsgemäße System liefert jedoch kontinuierlich verlaufende Sollübersetzungen. Im Falle eines Stufengetriebes ist deshalb erfindungsgemäß vorgesehen, daß bei einem Stufengetriebe den Getriebeübersetzungsstufen Übersetzungsbereiche zugeordnet sind. Zur Einstellung der Gangstufen wird dann festgestellt, in welchem der Übersetzungsbereiche die einzustellende Übersetzung liegt und abhängig von dem festgestellten Übersetzungsbereich wird die Getriebeübersetzungsstufe, also die Gangstufe, eingestellt.

Insbesondere ist vorgesehen, daß diese Übersetzungsbereiche eine wählbare Übersetzungsbreite aufweisen und die Übersetzungsbreite abhängig von der ermittelten Fahrereigenschaft und/oder abhängig von der vorliegenden Fahrsituation oder abhängig von dem Fahrzustand gewählt wird.

Weitere vorteilhafte Ausgestaltungen der Erfindung sind den Unteransprüchen zu entnehmen.

Zeichnung

Die Figur zeigt ein Übersichtsblockschaltbild der Erfindung, während die Figuren 2, 3, 4 und 5a - d die Funktionsweise einzelner Blöcke genauer offenbaren. Hierzu ist der Figur 2 ein Blockschaltbild, der Figur 3 ein Motorkennfeld, der Figur 4 ein Ablaufdiagramm und den Figuren 5a bis d Schemaskizzen zu entnehmen.

Ausführungsbeispiele

Die Erfindung soll anhand des im folgenden zu beschreibenden Ausführungsbeispiels erläutert werden.

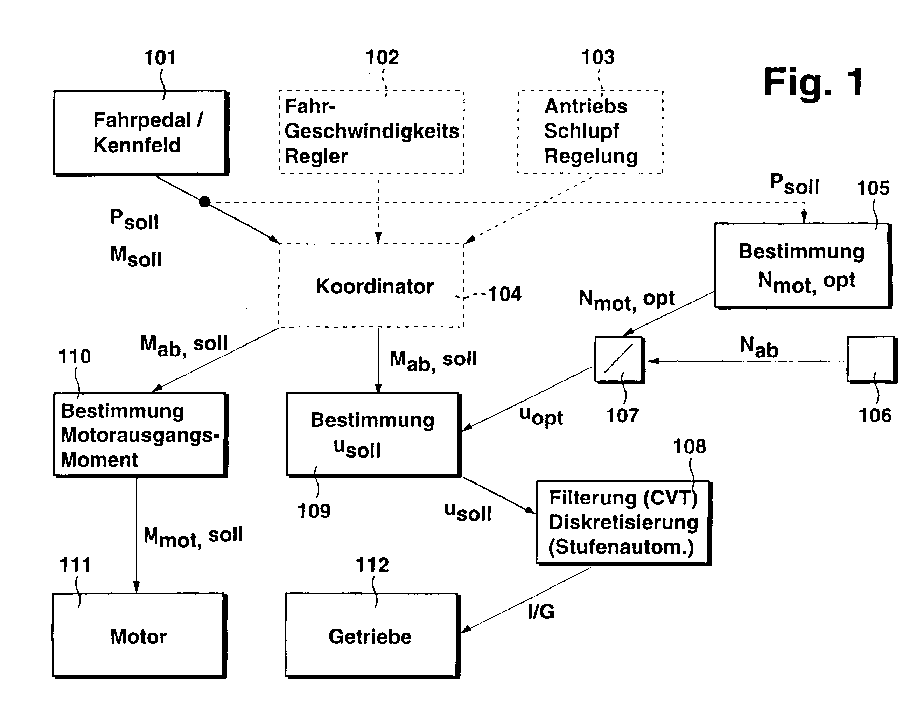

Die Figur 1 zeigt dazu mit dem Block 101 die Ermittelung eines Sollwertes $P_{soll}$ bzw. $M_{soll}$ für die Vortriebsleistung bzw. für das Vortriebsmoment. Dieser Sollwert wird in bekannter Weise im wesentlichen direkt oder indirekt (beispielsweise mittels eines Kennfeldes oder mittels eines Algorithmus) aus der Stellung des vom Fahrer betätigten Fahrpedals ermittelt. Optional sind mit den Blöcken 102 und 103 ein Fahrgeschwindigkeitsregler und ein Antriebsschlupfregelsystem gekennzeichnet. Diese Systeme können zur Einstellung einer bestimmten Fahrzeuglängsgeschwindigkeit bzw. zur Verhinderung eines übermäßigen Antriebschlupfes den vom Fahrer vorgegebenen Sollwert modifizieren. Diese Modifikation findet im Koordinator 104 statt. Der Koordinator 104 liefert dann ausgangsseitig einen Sollwert $M_{ab,soll}$ für das Abtriebsmoment. Im einfachsten Fall, gibt der Fahrer über das Fahrpedal das Sollabtriebsmoment $M_{ab,soll}$ direkt vor.

Dieser Sollwert für das Abtriebsmoment wird im Block 110 zu einem Motormomentsollwert $M_{mot,soll}$ verarbeitet und am Motor 111 in bekannter Weise eingestellt. Im Block 109 wird in noch zu beschreibender Weise die Sollübersetzung $u_{soll}$ unter anderem abhängig von diesem Sollabtriebsmomentenwunsch $M_{ab,soll}$ bestimmt. Die entsprechende Soll-Getriebeübersetzung $u_{soll}$ wird dem Getriebe bzw. der Getriebesteuerung 112 direkt oder indirekt (Block 108) zur Einstellung zugeführt. Der Block 108 beschreibt dabei eine bei einem kontinuierlich veränderbaren Getriebe übliche Filterung oder im Falle eines Stufenautomatikgetriebes eine noch zu beschreibende Diskretisierung der Sollübersetzung $u_{soll}$.

Im Block 105 wird als ein Schwerpunkt der Erfindung eine optimale Motordrehzahl $N_{mot,opt}$ in noch zu beschreibender Weise bestimmt. Im Block 107 wird dieser Wert durch Division mit der Abtriebsdrehzahl (Drehzahlsensor 106) zu einer optimalen Übersetzung $u_{opt}$ verarbeitet und der schon beschriebenen Einheit 109 zugeführt.

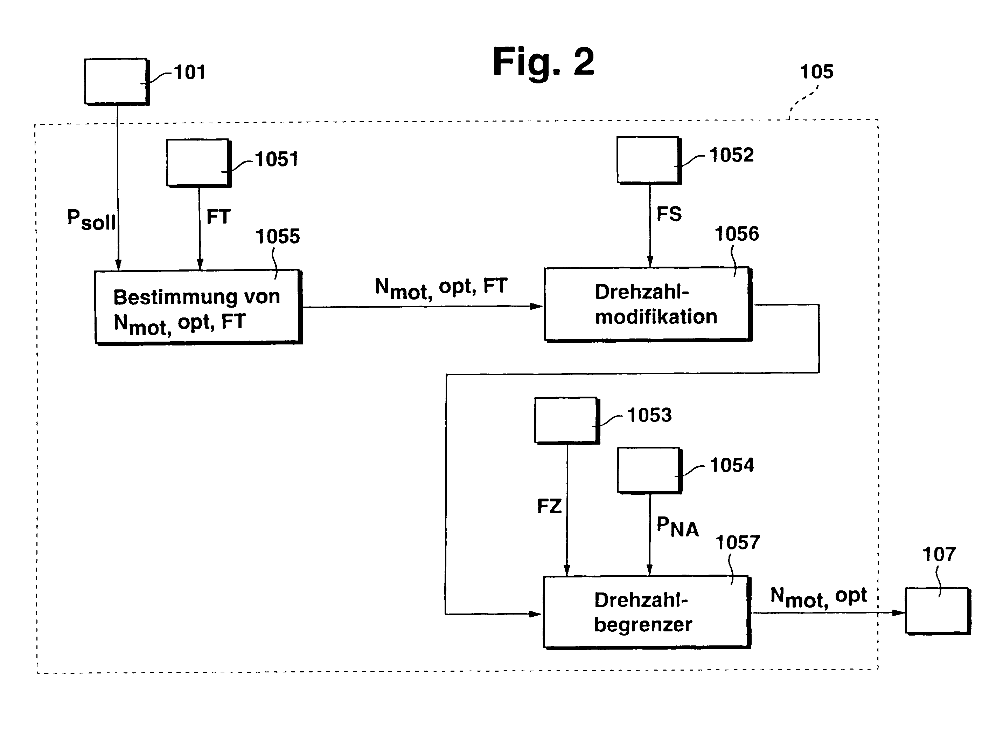

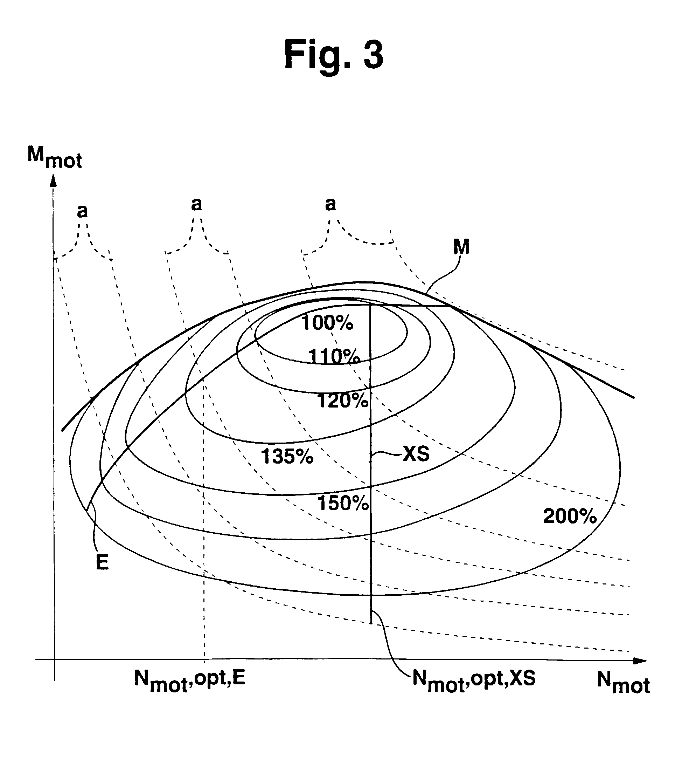

Die Figur 2 zeigt die genauere Funktion des Blocks 105 der Figur 1. Hierzu wird im Block 1055 abhängig von dem im Block 1051 bestimmten Fahrertyp und optional abhängig von dem vom Fahrer vorgegebenen Vortriebswunsch $P_{soll}$ bzw. $M_{soll}$ (Block 101) eine optimale Motordrehzahl $N_{mot,opt,FT}$ gebildet. Wie schon erwähnt wird der den Fahrertyp bzw. die Fahrereigenschaft repräsentierende Wert FT im Block 1051 in an sich bekannter Weise gebildet. Hierzu wird insbesondere die Stellung des vom Fahrer betätigbaren Fahrpedals, insbesondere das zeitliche Verhalten, ausgewertet. Zum Übertragungsverhalten des Blocks 1055 soll zunächst auf die Figur 3 eingegangen werden.

In der Figur 3 ist das Drehmoment des Fahrzeugmotors $M_{mot}$ über der Motordrehzahl $N_{mot}$ aufgetragen. Der Parameter ist hierbei der spezifische Kraftstoffverbrauch. In gestrichelter Weise sind die Hyperbeln a konstanter Leistung eingezeichnet. Die mit dem Buchstaben E gekennzeichnete Linie stellt die optimale Motordrehzahl für einen verbrauchsorientierten und die mit XS gekennzeichnete Linie die optimale Motordrehzahl für einen fahrleistungsorientierten Fahrer unter Berücksichtigung des Kraftstoffverbrauchs dar. Die Linie für den verbrauchsorientierten Fahrertyp läuft durch den Punkt geringsten Kraftstoffverbrauchs (100%). Mit dem Buchstaben M ist in der Figur 3 das bei der jeweiligen Motordrehzahl erreichbare maximale Drehmoment eingezeichnet.

In analoger Weise erhält man optimale Motordrehzahlen für diese Fahrertypen unter Berücksichtigung der Abgasemissionen. Durch eine geeignete Wichtung erhält man so eine gesamt-optimale Motordrehzahl für einen ökonomisch, d. h. verbrauchsorientierten, bzw. für einen extrem sportlichen, d. h. fahrleistungsorientierten, Fahrertyp. Für Fahrertypen zwischen diesen Extrema wird die optimale Motordrehzahl durch eine Interpolation zwischen den Werten, die durch den Verlauf E und den Verlauf XS angegeben werden, gebildet.

Die optimale Motordrehzahl als Funktion der Fahrereigenschaft, die bei konventionellen Getriebsteuerungssystemen als Applikationsparameter in den Schaltkennlinien (Stufenautomatikgetriebe) bzw. in den Verstellkennfeldern bei einem stufenlosen Getriebe CVT verborgen ist, kann erfindungsgemäß direkt aus den entsprechenden Motorkennfeldern (Motordrehmoment über Drehzahl mit Kraftstoffverbrauch und/oder Abgas als Parameter) gewonnen werden und stellt so keinen Applikationsparameter mehr dar. Hierzu werden, wie in der Figur 3 zu sehen ist, in diese Motorkennfelder die Hyperbeln a konstanter Leistung eingetragen. Für jede Leistungsforderung kann nun direkt eine Motordrehzahl mit minimalem Verbrauch und einem Motordrehzahl mit minimalem Abgas abgelesen werden, bei der diese Leistungsforderung erfüllt werden kann. Nun besteht lediglich noch die Aufgabe, ein geeignetes gemeinsames Optimum für Verbrauch und Abgas zu finden. Hat man sich für eine Optimierungstrategie entschieden, so kann für einen verbrauchsorientierten Fahrertyp direkt die optimale Drehzahl angegeben werden. Mit diesem Verfahren erhält man also eine Kennlinie E, die für einen verbrauchsorientierten Fahrertyp die optimale Motordrehzahl als Funktion des Leistungswunsches angibt. In ähnlicher Weise wird für einen fahrleistungsorientierten Fahrertyp aus den Motorkennfeldern für jede Leistungsforderung eine Drehzahl abgelesen, bei welcher (unter Berücksichtung der Abgaswerte) der Fahrer die maximale Momentenreserve hat. Dies ist dann die optimale Motordrehzahl (Kennlinie XS) für den verbrauchsorientierten Fahrertyp.

Ist nun, wie anhand der Figur 3 beschrieben, die unter Berücksichtigung des Fahrertyps und des Vortriebswunsches optimale Motordrehzahl $N_{mot,opt,FT}$ in Block 1055 gefunden, so wird diese Motordrehzahl im Block 1056 abhängig von der Fahrsituation modifiziert. Die Fahrsituation wird dabei im Block 1052 in an sich bekannter Weise ermittelt Im Block 1057 kann das im Block 1056 modifizierte Drehzahlsignal begrenzt werden. Insbesondere ist vorgesehen, daß die Begrenzung abhängig von dem im Block 1053 in an sich bekannter Weise ermittelten Fahrzustand (Signal FZ) und abhängig von dem im Block 1054 ermittelten Momenten- bzw. Leistungsforderung der Nebenaggregate (Signal $P_{NA}$) stattfindet. Die so ermittelte optimale Motordrehzahl $N_{mot,opt}$ wird dem schon beschriebenen Block 107 zugeführt. Der Grundgedanke des Blocks 105 ist also, zunächst eine optimale Motordrehzahl als Funktion der Fahrereigenschaft zu bestimmen und diese dann durch die Fahrsituation, den Fahrzustand oder durch die Momentenforderung von Nebenaggregaten zu modifizieren. So kann beispielsweise bei einer Bergabfahrt zur Erhöhung des Schleppmoments eine höhere Motordrehzahl optimal sein. Zusätzlich kann beispielsweise im Warmlauf des Fahrzeugmotors die Mindestdrehzahl, die über die Getriebeübersetzung am Motor eingestellt wird, einen höheren Wert haben als bei einem betriebswarmen Motor. Analog kann beispielsweise im Stadtfahrbetrieb die Motordrehzahl durch die Getriebeübersetzung auf einen maximalen Wert begrenzt werden, wodurch die Lärm- und Abgasemission reduziert wird. Zudem kann beispielsweise ein Nebenaggregat wie die Lichtmaschine oder die Klimaanlage eine erhöhte Motordrehzahl auch außerhalb des Leerlaufs anfordern, die durch eine entsprechende Getriebeübersetzung einzustellen ist.

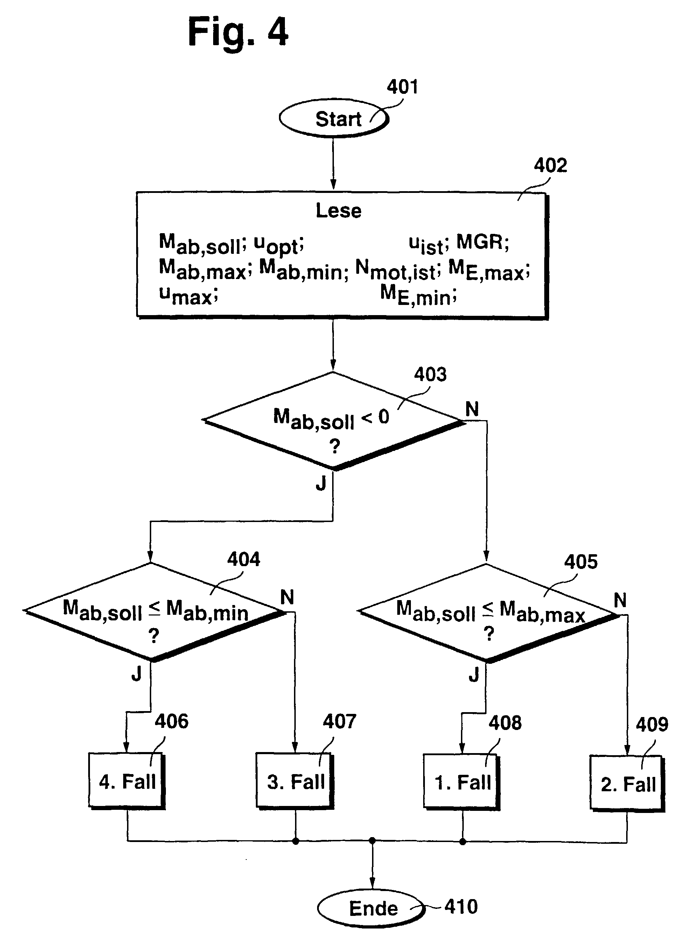

Die Funktionsweise des Blocks 109 (Fig. 1) wird anhand des in der Figur 4 gezeigten Ablaufs näher geschildert. In dem Block 109 wird aus der optimalen Übersetzung $u_{opt}$ die Sollübersetzung $u_{soll}$ bestimmt. Einflußgrößen hierfür sind:

1. das vom Momentengeber (Block 101 bzw. Koordinator 104) geforderte Abtriebsmoment am Getriebeausgang $M_{ab,soll}$.
2. das bei der aktuellen Motordrehzahl mögliche Intervall des Motorausgangsmomentes ($M_{E,max}$ und $M_{E,min}$)
3. die aktuelle Drehmomentenverstärkung des Getriebes, berechnet aus der momentanen Übersetzung und dem Getriebewirkungsgrad,
4. die aktuelle Drehmomentenverstärkung eines eventuell vorhandenen Momentenwandlers.

Der Block 109 funktioniert dabei insbesondere derart, daß die optimale Übersetzung $u_{opt}$ als Sollübersetzung $u_{soll}$ gefordert wird, solange das geforderte Abtriebsmoment $M_{ab,soll}$ mit der aktuellen Getriebeübersetzung $u_{ist}$ erreichbar ist. Andernfalls kann beispielsweise das Verhältnis aus gefordertem Abtriebsmoment und maximal möglichem Getriebeeingangsmoment als Sollübersetzung gefordert werden. Dies soll nun im folgenden anhand der Figur 4 genauer beschrieben werden.

Nach dem Startschritt 401 werden im Schritt 402 verschiedene Werte, die in den folgenden Schritten benötigt werden, eingelesen. Im Schritt 403 wird zunächst abgefragt, ob der momentane Momentenwunsch $M_{ab,soll}$ positiv oder negativ ist. Ist der Momentenwunsch positiv, d. h. daß sich das Fahrzeug im Zugbetrieb befindet, so wird im Schritt 405 abgefragt, ob dieses Sollmoment $M_{ab,soll}$ kleiner oder gleich dem maximal möglichen Wert $M_{ab,max}$ ist. Das maximale Abtriebsmoment $M_{ab,max}$ hängt selbstverständlich von der aktuell eingestellten Getriebeübersetzung $u_{ist}$ ab. Liegt der Momentenwunsch nicht über dem maximal möglichen Wert, so handelt es sich bei der vorliegenden Betriebsbedingung um einen Zugbetrieb mit geringer Momentenforderung. In diesem Fall wird im Block 408 in noch zu beschreibender Weise die Getriebesollübersetzung $U_{soll}$ und das einzustellende Getriebeeingangsmoment $M_{E,soll}$ gebildet.

Wird im Block 405 festgestellt, daß die Momentenanforderung $M_{ab,soll}$ über dem maximal möglichen Wert $M_{ab,max}$ liegt, so handelt es sich um einen Zugbetrieb mit erhöhter Momentenanforderung. In diesem Fall wird in noch zu beschreibender Weise im Block 409 die entsprechende Getriebesollübersetzung und das entsprechende Getriebeeingangsmoment eingestellt.

Wird im Schritt 403 festgestellt, daß sich das Fahrzeug im Schubbetrieb befindet, so wird im Schritt 404 festgestellt, ob das geforderte Moment $M_{ab,soll}$ kleiner oder gleich dem minimal möglichen Moment $M_{ab,min}$ ist. Auch dieses minimale Moment ist selbstverständlich abhängig von der momentan eingestellten Getriebeübersetzung. Liegt der Sollwert für das Abtriebsmoment über dem minimalen Wert, so wird im Block 407 in noch zu beschreibender Weise die Getriebeübersetzung und das Getriebeeingangsmoment eingestellt. In diesem Fall liegt ein Schubbetrieb mit geringer negativer Momentenforderung vor. Wird allerdings im Block 404 festgestellt, daß ein Schubbetrieb mit hoher negativer Momentenforderung vorliegt, so wird im noch zu beschreibenden Block 406 die Getriebeübersetzung und das Getriebeeingangsmoment in entsprechender Weise eingestellt. Nach dem Endschritt 410 wird der in der Figur 4 gezeigte Ablauf erneut gestartet.

Im folgenden wird nun der mit den Blöcken 406, 407, 408 und 409 gekennzeichnete Ablauf beschrieben. Die hierzu dargestellten vier Fälle beinhalten Gleichungen, wie die angestrebte (nach verschiedenen Kriterien optimierte) Motordrehzahl unter Berücksichtigung des geforderten Abtriebsmoments durch die Wahl der Getriebeübersetzung einzustellen ist. Diese Gleichungen beziehen sich auf den Fall des Betriebes ohne Drehmomentenwandler bzw mit einer vollständig geschlossenen Wandlerüberbrückungskupplung. Bei einer geöffneten oder einer schlupfaufweisenden Wandlerkupplung ist neben der Getriebeübersetzung auch noch die Drehmomentenverstärkung des Wandlers in bekannter Weise zu berücksichtigen.

i. Fall: Zugbetrieb mit wenig Last (Block 408)

In diesem Fall gilt: $0 < M_{ab,soll} \leq M_{ab,max}$

Dies ist der häufigste Fall während des normalen Fahrbetriebs. Der Fahrer fordert ein konstantes (positives) Abtriebsmoment, das jedoch geringer ist als das mit der aktuellen Übersetzung multiplizierte bei der aktuellen Motordrehzahl maximal mögliche Moment unter Berücksichtigung der Getriebeverluste. Die Getriebesollübersetzung $u_{soll}$ und das Getriebeeingangssollmoment $M_{E,soll}$ wird in diesem Fall wie folgt gewählt:

$$u_{soll} := u_{opt}$$

$$M_{E,soll} := (M_{ab,soll}/u_{ist}) + MGR$$

Das Getriebe stellt langfristig die nach gewissen Kriterien optimierte Übersetzung uopt ein und der Motor liefert das gewünschte Abtriebsmoment, wobei die Getriebeistübersetzung $u_{ist}$ und die Reibungsverluste MGR im Getriebe berücksichtigt werden. Statt $u_{ist}$ und MGR kann auch die aktuelle Drehmomentenverstärkung $\mu_{ist}$ des Getriebes berücksichtigt werden, die sich aus dem Produkt aus $u_{ist}$ und dem aktuellen Getriebewirkungsgrad berechnet.

In dem vorliegenden Fall bewirken geringe Änderungen des geforderten Abtriebsmomentes Mab,soll eine Änderung des Sollgetriebeeingangsmoments ME,soll bei im wesentlichen festgehaltener Übersetzung.

Eine Abweichung zwischen $u_{soll}$ und $u_{opt}$ tritt beim Übergang der im folgenden zu beschreibenden drei weiteren Fälle zu diesem Fall ein. Eine schnelle Änderung von $u_{soll}$ beim Übergang zwischen den vier Fällen oder bei schneller Änderung von $M_{ab,soll}$ in den Fällen 2 und 4 wird in geeigneter Weise im Block 108 gefiltert und begrenzt.

Hierzu kann beispielsweise im Block 108 vorgesehen sein, daß die tatsächlich einzustellende Übersetzung zu

$$I := [u_{soll} * HdM_{max}] + [u_{ist} * (1- HdM_{max})]$$

gewählt wird. Der zusätzliche Term $u_{ist}*(1-HdM_{max})$ sorgt dabei für die asymptotische Angleichung von $u_{soll}$ und $u_{ist}$ an $u_{opt}$. Die Angleichung an die optimale Übersetzung geschieht hierbei um so schneller, je dichter das momentan gelieferte Getriebeeingangsmoment an dem bei der aktuellen Drehzahl maximalen Moment des Motors liegt.

Im Block 408 wird also die Momentenforderung im stationären Betrieb nur über die Drosselklappe (Ottomotor) bzw. die Einspritzmenge (Dieselmotor) erfüllt.

2. Fall: Zugbetrieb mit hoher Momentenforderung (Block 409)

In diesem Fall gilt:

$$M_{ab,soll} > M_{ab,max} > 0$$

Dies ist der Vollast-Fall für den Fahrzeugmotor. In diesem Fall liefert der Motor bereits ein für die aktuelle Drehzahl maximales Moment. Eine höhere Abtriebsmomentenforderung kann somit nur durch eine Übersetzungsverstellung erzielt werden. Die Übersetzung wird dabei so gewählt, daß das geforderte Abtriebsmoment bereitgestellt wird, ohne den Motor zu überdrehen. Das bedeutet, daß ggf. das geforderte Abtriebsmoment nicht realisiert werden kann. Im einzelnen werden folgende Werte für das Getriebeeingangsmoment und für die Übersetzung gewählt:

$$M_{E,soll} := M_{E,max}(N_{mot,ist})$$

$$u_{soll} := min[(M_{ab,soll}+MGR)/M_{E,soll}; u_{max}]$$

In diesem Fall kann also die Momentenforderung nur durch eine Erhöhung der Übersetzung erfüllt werden.

3. Fall: Schubbetrieb mit geringer negativer Momentenforderung (Block 407)

Dieser Fall ist gekennzeichnet durch folgende Gleichung:

$$0 > M_{ab,soll} > M_{ab,min}$$

In diesem Fall wird ein negatives Abtriebsmoment gefordert, wobei jedoch das Motorschleppmoment nur teilweise ausgenutzt werden soll. Dieser Fall wird analog dem ersten Fall behandelt. Es werden wieder die optimale Übersetzung und das für das geforderte Abtriebsmoment benötigte Getriebeeingangsmoment eingestellt.

$$u_{soll} := u_{opt}$$

$$M_{E,soll} := (M_{ab,soll}/u_{ist}) + MGR$$

In diesem Fall soll die Motorbremse nur teilweise wirken.

Auch hier kann im Block 108 vorgesehen sein, daß die einzustellende Übersetzung zu

$$I := [u_{soll} * HdM_{min}] + [u_{ist} * (1- HdM_{min})]$$

gewählt wird.

4. Fall: Schubbetrieb mit hoher negativer Momtenforderung (Block 406)

In diesem Fall gilt:

$$M_{ab,soll} \leq M_{ab,min} < 0$$

In diesem Fall ist das geforderte (negative) Abtriebsmoment vom Betrag her größer als das Motorschleppmoment bei der aktuellen Drehzahl. Um die Momentenforderung zu realisieren, wird das Getriebe zur maximal möglichen Übersetzung verstellt.

$$u_{soll} := min[(M_{ab,soll}+MGR)/M_{E,soll} ; u_{max}]$$

$$M_{E,soll} := M_{E,min}(N_{mot,ist})$$

In diesem Fall soll die Motorbremse also voll wirken.

Die im Block 109 gebildete Sollübersetzung $u_{soll}$ wird im Block 108 im Falle eines kontinuierlich verstellbaren Getriebes in an sich bekannter Weise zeitgefiltert, damit es nicht zu unkomfortablen schnellen Übersetzungsregelungen kommt. Abhängig von einem solchermaßen gefilterten Signal wird das kontinuierlich veränderbare Getriebe 112 angesteuert.

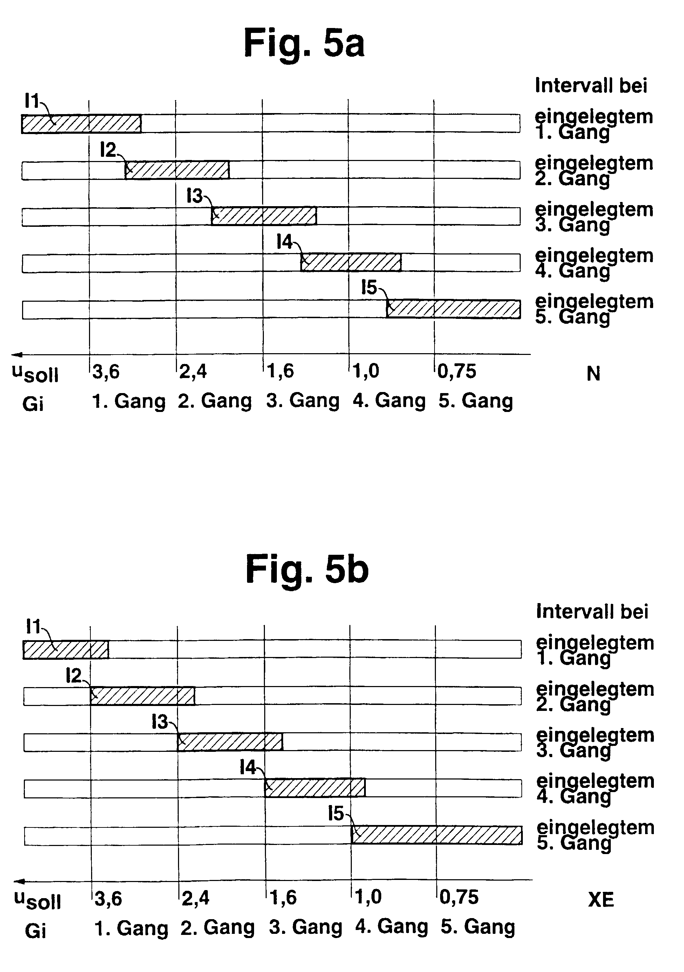

Handelt es sich bei dem Getriebe 112 allerdings um ein Stufengetriebe, so muß die kontinuierliche Übersetzungsvorgabe $u_{soll}$ auf die diskreten Gänge abgebildet werden. Hierzu werden, wie in der Figur 5a bis d gezeigt ist, Übersetzungsintervalle $I_i$ um jede Gangstufe gebildet. Die Breite des Übersetzungsintervalls kann beispielsweise abhängen von

1. der Fahrereigenschaft (z. B. sportliches oder ökonomisches Fahrverhalten)

2. der Fahrsituation (beispielsweise Stadtbetrieb, Stop-and-go, Fahren unter erhöhter Last, Bergabfahrt)

3. dem Fahrzeugzustand (beispielsweise Warmlauf)

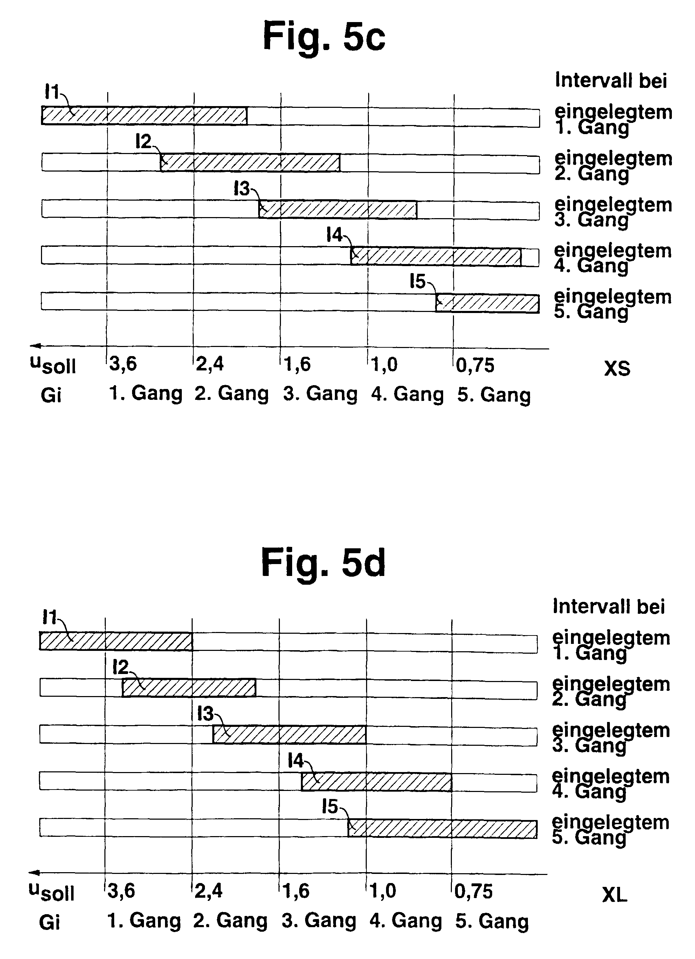

In der Figur 5a ist eine solche Abbildung der kontinuierlichen Übersetzungsvorgabe $u_{soll}$ auf die diskreten Gänge (1 - 5) für ein normales Fahrverhalten beispielhaft aufgeführt. Die Figur 5b zeigt ein geändertes Abbildungsverhalten für einen sehr verbrauchsorientierten Fahrertyp während die Figur 5c an eine leistungsorientierte Fahrweise angepaßt ist. Die Figur 5d zeigt die Abbildung für einen Fahrbetrieb unter erhöhter Last (beispielsweise Bergauffahrt).

Die in der Figur 5a bis d gezeigten Übersetzungsintervalle überdecken dabei den gesamten Bereich der kontinuierlichen Übersetzungsvorgabe, wobei sie sich in der Regel überschneiden, um eine Hysterese zu ermöglichen. Überschreitet die kontinuierliche Übersetzungsvorgabe $u_{soll}$ den Rand des Übersetzungsintervalls $I_i$ des aktuell eingelegten diskreten Gangs i, so wird eine Hoch- oder Rückschaltung angefordert.

Wie schon erwähnt wird parallel zur Berechnung der Sollübersetzung in den Blöcken 110 bzw. 111 das Sollausgangsmoment $M_{mot,soll}$ des Fahrzeugmotors berechnet. Die Grundlage hierfür ist die aktuelle Drehmomentenverstärkung von Getriebe und einem evtl vorhandenen Drehmomentenwandler. Die Drehmomentenverstärkung des Getriebes ist das Produkt aus der Übersetzung des Getriebes, die von der Sollübersetzung abweichen kann, und den Getriebewirkungsgrad. Die Berechnung des Sollmotorausgangsmoments kann beispielsweise so geschehen, daß hierfür der Quotient aus der Momentenforderung am Getriebeausgang und dem Produkt aus der Momentenverstärkung von Getriebe und Wandler genommen wird. Ggf. kann dieses Sollmotorausgangsmoment noch auf das maximale Ausgangsmoment begrenzt werden, das der Motor zur Zeit leisten kann.

Zusammenfassend ist zu bemerken, daß anhand der Figur 1 eine koordinierte Triebstangsteuerung, d. h. eine gemeinsame Steuerung von Motor 111 und Getriebe 112 eines Kraftfahrzeugs vorgestellt wird. Hierzu werden ein Sollmotorausgangsmoment $M_{mot,soll}$ und eine Sollübersetzung $u_{soll}$ bestimmt, die vom Motor bzw. vom Getriebe eingestellt werden sollen. Die Sollübersetzung $u_{soll}$ wird bestimmt aus einer optimalen Motordrehzahl $N_{mot,opt}$, die abhängt von der Fahreigenschaft, der Fahrsituation und dem Fahrzustand.

Abkürzungsverzeichnis:

| | |
|---|---|
| $N_{ab}$: | Getriebeabtriebsdrehzahl |
| $N_{mot}$: | Motordrehzahl |
| | $= N_{ab} * u_{ist}$ |
| $N_{mot,ist}$: | aktuelle Motordrehzahl |
| $N_{mot,min}$: | minimal zulässige Motordrehzahl |
| $N_{mot,max}$: | maximal zulässige Motordrehzahl |
| $N_{mot,opt}$: | optimale Motordrehzahl nach gewissen Kriterien (Verbrauch, Leistung...) |
| $u_{ist}$: | aktuelle Übersetzung |
| $u_{soll}$: | geforderte Übersetzung, diese muß im Fall eines CVT noch gefiltert werden, für ein Stufengetriebe muß diese auf die möglichen Übersetzungen abgebildet werden. |
| $u_{OD}$: | kleinste Übersetzung des Getriebes |
| $u_{low}$: | größte Übersetzung des Getriebes |
| $u_{min}$: | minimal erlaubte Übersetzung |
| | $= max[N_{mot,min}/N_{ab} ; u_{OD}]$ |
| $u_{max}$: | maximal erlaubte Übersetzung |
| | $= min[N_{mot,max}/N_{ab} ; u_{low}]$ |
| $u_{opt}$: | optimale Übersetzung |
| | $= min[N_{mot,opt}/Nab) ; u_{low}]$ |
| $M_{E,ist}$: | aktuelles Getriebeeingangsmoment |
| $M_{E,soll}$: | mit der aktuellen Übersetzung gefordertes Getriebeeingangsmoment |
| $M_{E,max}$: | bei der aktuellen Motordrehzahl $N_{mot,ist}$ maximal mögliches Getriebeeingangsmoment (z.B: Drosselklappe voll geöffnet) |
| $M_{E,min}$: | bei der aktuellen Motordrehzahl $N_{mot,ist}$ minimal mögliches Getriebeeingangsmoment [z.B: minimale Einspritzmenge (bei Dieselmotor)], Nebenbedingung: $M_{E,min}(N_{mot,ist}) < 0$ |
| MGR: | Reibmoment im Getriebe, Nebenbedingung: MGR > 0 |
| $M_{ab,ist}$: | aktuelles Abtriebsmoment |
| | $= (M_{E,ist} * u_{ist})-MGR$ |
| $M_{ab,soll}$: | vom Momentengeber (z.B. Fahrpedal) gefordertes Abtriebsmoment |
| $M_{ab,max}$: | maximales Abtriebsmoment bei der aktuellen Übersetzung |
| | $= [M_{E,max}(N_{mot,ist}) * u_{ist}] - MGR$ |
| $M_{ab,min}$: | minimales Abtriebsmoment bei der aktuellen Übersetzung |
| | $= [M_{E,min}(N_{mot,ist}) * u_{ist}] - MGR < 0$ |
| $HdM_{max}$: | relative Differenz zum maximalen Moment |
| | $= (M_{ab,max} - M_{ab,soll})/M_{ab,max}$ |
| $HdM_{min}$: | relative Differenz zum minimalen Moment |
| | $= (M_{ab,min} - M_{ab,soll})/M_{ab,min}$ |
| $\mu_{ist}$: | aktuelle Drehmomentenverstärkung des Getriebes $= u_{ist} * \eta_{ist}$. |
| $\eta_{ist}$: | aktueller Getriebewirkungsgrad |

**Patentansprüche**

1. System zur Einstellung eines in seiner Übersetzung veränderbaren Kraftfahrzeuggetriebes (112), bei dem eine Soll-Drehzahl ($N_{mot,opt}$) des Fahrzeugmotors (111) bestimmt wird und abhängig von der bestimmten Soll-Drehzahl ($N_{mot,opt}$) des Fahrzeugmotors die Übersetzung ($u_{soll}$) des Getriebes (112) eingestellt wird, wobei wenigstens eine die Fahrsituation und/oder den Fahrzustand beeinflussende oder repräsentierende erste Größe (FS, FZ) und eine die Momenten- und/oder Leistungsforderung und/oder eine die Fahrereigenschaft beeinflussende oder repräsentierende weitere Größe ($M_{soll}$, $P_{soll}$, FT) ermittelt wird, dadurch gekennzeichnet, daß zur Bestimmung der Soll-Drehzahl ($N_{mot,opt}$) des Fahrzeugmotors (111) in einem ersten Schritt (1055) eine erste Soll-Drehzahl ($N_{mot,opt,FT}$) abhängig von der ermittelten weiteren Größe (FT) bestimmt wird und diese erste Soll-Drehzahl ($N_{mot,opt,FT}$) in einem weiteren Schritt (1056) abhängig von der die Fahrsituation beeinflussende oder repräsentierenden Größe (FS) modifiziert wird und/oder in einem weiteren Schritt (1057) abhängig von der den Fahrzustand beeinflussende oder repräsentierenden Größe (FZ) begrenzt wird.

2. System nach Anspruch 1, dadurch gekennzeichnet, daß als die, die Fahrsituation beeinflussende oder repräsentierende Größe (FS) ermittelt wird, ob ein Stadtfahrbetrieb, ein Stop&Go-Fahrbetrieb, ein Fahrbetrieb mit erhöhtem Schlupf (z.B. auf Eis/ Schnee), ein Fahrbetrieb unter erhöhter Last (z.B. Bergauffahrt) und/oder eine Bergabfahrt vorliegt und/oder als die, den Fahrzustand beeinflussende oder repräsentierende Größe (FZ) ermittelt wird, ob ein Warmlaufbetrieb des Fahrzeugmotors (111) vorliegt.

3. System nach Anspruch 1, dadurch gekennzeichnet, daß die Ermittlung der Momenten- und/oder Leistungsforderung ($M_{soll}$, $P_{soll}$) abhängig von der Stellung eines vom Fahrer betätigbaren Fahrpedals (101) und/oder abhängig von dem erfaßten Betriebszustand ($P_{NA}$) wenigstens eines vom Fahrzeugmotor angetriebenen Nebenaggregats (Stromgenerator, Klimaanlagenkompressor) ist.

4. System nach Anspruch 1, dadurch gekennzeichnet, daß eine die momentane Abtriebsdrehzahl des Getriebes (112) repräsentierende Abtriebsdrehzahl ($N_{ab}$) erfaßt wird und aus der bestimmten Soll-Drehzahl ($N_{mot,opt}$) des Fahrzeugmotors (111) und der erfaßten Abtriebsdrehzahl ($N_{ab}$) eine Soll-Getriebeübersetzung ($u_{opt}$) ermittelt wird.

5. System nach Anspruch 4, dadurch gekennzeichnet, daß

- in dem Betriebsbereich, in dem sich die erfaßte positive Momenten- und/oder Leistungsforderung ($M_{ab,soll}$) unterhalb des bei der momentanen Getriebeübersetzung ($u_{ist}$) maximal möglichen Moments ($M_{ab,max}$) oder unterhalb der bei der momentanen Getriebeübersetzung maximal möglichen Leistung befindet (Zugbetrieb mit geringer Momentenanforderung), die Getriebeübersetzung ($u_{soll}$) derart eingestellt wird, daß die bestimmte Solldrehzahl ($N_{mot,opt}$) des Motors im wesentlichen konstant bleibt und eine Änderung der Momenten- und/oder Leistungsforderung ($M_{ab,soll}$) im wesentlichen durch eine Änderung des Motormomentes ($M_{E,soll}$) getätigt wird und/oder

- in dem Betriebsbereich, in dem sich die erfaßte positive Momenten- und/oder Leistungsforderung ($M_{ab,soll}$) oberhalb des bei der momentanen Getriebeübersetzung ($u_{ist}$) maximal möglichen Moments oder oberhalb der bei der momentanen Getriebeübersetzung maximal möglichen Leistung ($M_{ab,max}$) befindet (Zugbetrieb mit hoher Momentenanforderung), die Getriebeübersetzung ($u_{soll}$) erhöht wird, während das Motormoment ($M_{E,soll}$) im wesentlichen auf den maximal möglichen Wert ($M_{ab,max}$) eingestellt wird und/oder

- in dem Betriebsbereich, in dem sich die erfaßte negative Momenten- und/oder Leistungsforderung ($M_{ab,soll}$) oberhalb des bei der momentanen Getriebeübersetzung ($u_{ist}$) minimal möglichen Moments ($M_{ab,min}$) oder oberhalb der bei der momentanen Getriebeübersetzung minimal möglichen Leistung befindet (Schubbetrieb mit geringer negativer Momentenanforderung), die Getriebeübersetzung ($u_{soll}$) derart eingestellt wird, daß die bestimmte Solldrehzahl ($N_{mot,opt}$) des Motors im wesentlichen konstant bleibt und eine Änderung der Momenten- und/oder Leistungsforderung ($M_{ab,soll}$) im wesentlichen durch eine Änderung des Motormomentes ($M_{E,soll}$) getätigt wird und/oder

- in dem Betriebsbereich, in dem sich die erfaßte negative Momenten- und/oder Leistungsforderung ($M_{ab,soll}$) unterhalb des bei der momentanen Getriebeübersetzung ($u_{ist}$) minimal möglichen Motormoments ($M_{ab,min}$) oder unterhalb der bei der momentanen Getriebeübersetzung minimal möglichen Leistung befindet (Schubbetrieb mit hoher negativer Momentenanforderung), die Übersetzung des Getriebes ($u_{soll}$) in Richtung der minimal erlaubten Übersetzung eingestellt wird.

6. System nach Anspruch 4, dadurch gekennzeichnet, daß

- in dem Betriebsbereich, in dem sich die erfaßte positive Momenten- und/oder Leistungsforderung ($M_{ab,soll}$) unterhalb des bei der momentanen Getriebeübersetzung ($u_{ist}$) maximal möglichen Moments ($M_{ab,max}$) oder unterhalb der bei der momentanen Getriebeübersetzung maximal möglichen Leistung befindet (Zugbetrieb mit geringer Momentenanforderung), die Einstellung ($u_{soll}$) der Übersetzung des Getriebes abhängig von der ermittelten Soll-Getriebeübersetzung ($u_{opt}$) getätigt wird und/oder

- in dem Betriebsbereich, in dem sich die erfaßte negative Momenten- und/oder Leistungsforderung ($M_{ab,soll}$) oberhalb des bei der momentanen Getriebeübersetzung ($u_{ist}$) minimal möglichen Motormoments ($M_{ab,min}$) oder oberhalb der bei der momentanen Getriebeübersetzung minimal möglichen Motorleistung befindet (Schubbetrieb mit geringer negativer Momentenanforderung), die Einstellung ($u_{soll}$) der Übersetzung des Getriebes abhängig von der ermittelten Soll-Getriebeübersetzung ($u_{opt}$) getätigt wird.

7. System nach Anspruch 1, dadurch gekennzeichnet, daß das Getriebe (112) diskrete Getriebeübersetzungsstufen ($G_i$) aufweist, denen Übersetzungsbereiche ($I_i$) zugeordnet sind, wobei festgestellt wird, in welchem der Übersetzungsbereiche ($I_i$) die einzustellende Übersetzung ($u_{soll}$) liegt und abhängig von dem festgestellten Übersetzungsbereich (Ii) eine Getriebeübersetzungsstufe ($G_i$) eingestellt wird.

8. System nach Anspruch 7, dadurch gekennzeichnet, daß die Übersetzungsbereiche ($I_i$) eine wählbare Übersetzungsbreite aufweisen und die Übersetzungsbreite abhängig von der ermittelten ersten Größe (FZ, FS) und/oder abhängig von einer die Fahrereigenschaft repräsentierenden weiteren Größe (FT) gewählt wird.

**Claims**

1. System for adjusting a motor vehicle gearbox (112) whose transmission ratio is variable, in which a required rotational speed ($N_{mot,\,opt}$) of the vehicle engine (111) is determined and the transmission ratio ($u_{soll}$) of the gearbox (112) is adjusted as a function of the required rotational speed ($N_{mot,\,opt}$) determined for the vehicle engine, at least one first parameter (FS, FZ) influencing or representing the driving situation and/or the driving condition and one further parameter ($M_{soll}$, $P_{soll}$, FT) influencing or representing the torque and/or power demand and/or the driver characteristics is determined, characterized in that in order to determine the required rotational speed ($N_{mot,\,opt}$) of the vehicle engine (111) a first required rotational speed

($N_{mot, opt, FT}$) is determined in a first step (1055) as a function of the further parameter (FT) determined and this first required rotational speed ($N_{mot, opt, FT}$) is modified in a further step (1056) as a function of the parameter (FS) influencing or representing the driving situation and/or is limited in a further step (1057) as a function of the parameter (FZ) influencing or representing the driving condition.

2. System according to Claim 1, characterized in that as the parameter (FS) influencing or representing the driving situation, a determination is made as to whether a city driving operation, a stop-&-go driving operation, a driving operation with increased slip (for example on ice/snow), a driving operation with increased load (for example uphill travel) and/or downhill travel is present and/or a determination is made as to whether a warm running operation of the vehicle engine (111) is present as the parameter (FZ) influencing or representing the driving condition.

3. System according to Claim 1, characterized in that the determination of the torque and/or power demand ($M_{soll}$, $P_{soll}$) is dependent on the position of an accelerator pedal (101) which can be actuated by the driver and/or dependent on the recorded operating condition ($P_{NA}$) of at least one auxiliary unit (alternator, air conditioning compressor) driven by the vehicle engine.

4. System according to Claim 1, characterized in that an output rotational speed ($N_{ab}$) representing the instantaneous output rotational speed of the gearbox (112) is recorded and a required gearbox transmission ratio ($u_{opt}$) is determined from the required rotational speed ($N_{mot, opt}$) determined for the vehicle engine (111) and the recorded output rotational speed ($N_{ab}$).

5. System according to Claim 4, characterized in that

   - in the operating range in which the recorded positive torque and/or power demand ($M_{ab, soll}$) is located below the maximum possible torque ($M_{ab, max}$) at the instantaneous gearbox transmission ratio ($u_{ist}$) or below the maximum possible power at the instantaneous gearbox transmission ratio (tractive operation with low torque demand), the gearbox transmission ratio ($u_{soll}$) is adjusted in such a way that the required rotational speed ($N_{mot, opt}$) determined for the engine remains essentially constant and a change to the torque and/or power demand ($M_{ab, soll}$) is essentially actuated by a change to the engine torque ($M_{E, soll}$) and/or
   - in the operating range in which the recorded positive torque and/or power demand ($M_{ab, soll}$)

is located above the maximum possible torque at the instantaneous gearbox transmission ratio ($u_{ist}$) or above the maximum possible power ($M_{ab, max}$) at the instantaneous gearbox transmission ratio (tractive operation with high torque demand), the gearbox transmission ratio ($u_{soll}$) is increased, while the engine torque ($M_{E, soll}$) is essentially adjusted to the maximum possible value ($M_{ab, max}$) and/or

   - in the operating range in which the recorded negative torque and/or power demand ($M_{ab, soll}$) is located above the minimum possible torque ($M_{ab, min}$) at the instantaneous gearbox transmission ratio ($u_{ist}$) or above the minimum possible power at the instantaneous gearbox transmission ratio (overrun operation with low negative torque demand), the gearbox transmission ratio ($u_{soll}$) is adjusted in such a way that the required rotational speed ($N_{mot, opt}$) determined for the engine remains essentially constant and a change to the torque and/or power demand ($M_{ab, soll}$) is essentially actuated by a change to the engine torque ($M_{E, soll}$) and/or
   - in the operating range in which the recorded negative torque and/or power demand ($M_{ab, soll}$) is located below the minimum possible engine torque ($M_{ab, min}$) at the instantaneous gearbox transmission ratio ($u_{ist}$) or below the minimum possible power at the instantaneous gearbox transmission ratio (overrun operation with high negative torque demand), the transmission ratio of the gearbox ($u_{soll}$) is adjusted in the direction of the minimum permissible transmission ratio.

6. System according to Claim 4, characterized in that

   - in the operating range in which the recorded positive torque and/or power demand ($M_{ab, soll}$) is located below the maximum possible torque ($M_{ab, max}$) at the instantaneous gearbox transmission ratio ($u_{ist}$) or below the maximum possible power at the instantaneous gearbox transmission ratio (tractive operation with low torque demand), the adjustment ($u_{soll}$) of the transmission ratio of the gearbox is actuated as a function of the required gearbox transmission ratio ($u_{opt}$) determined and/or
   - in the operating range in which the recorded negative torque and/or power demand ($M_{ab, soll}$) is located above the minimum possible engine torque ($M_{ab, min}$) at the instantaneous gearbox transmission ratio ($u_{ist}$) or above the minimum possible engine power at the instantaneous gearbox transmission ratio (overrun operation with low negative torque demand), the adjustment ($u_{soll}$) of the transmis-

sion ratio of the gearbox is actuated as a function of the required gearbox transmission ratio ($u_{opt}$) determined.

7. System according to Claim 1, characterized in that the gearbox (112) has discrete gearbox transmission ratio steps ($G_i$) to which transmission ratio ranges ($I_i$) are allocated, a determination being made of the transmission ratio ranges ($I_i$) within which the transmission ratio ($u_{soll}$) to be adjusted is located and a gearbox transmission ratio step ($G_i$) being set as a function of the transmission ratio range ($I_i$) determined.

8. System according to Claim 7, characterized in that the transmission ratio ranges ($I_i$) have a transmission ratio width which can be selected and the transmission ratio width is selected as a function of the first parameter (FZ, FS) determined and/or as a function of a further parameter (FT) representing the driver characteristics.

**Revendications**

1. Système de réglage d'une boîte de vitesses de véhicule automobile (111) de rapport variable, selon lequel

   • on définit un régime de consigne ($N_{mot,opt}$) du moteur (111) du véhicule et en fonction du régime de consigne ainsi défini ($N_{mot,opt}$) du moteur du véhicule, on règle le rapport ($u_{cons}$) de la boîte de vitesses (112),
   • on détermine au moins une première grandeur (FS, FZ) influençant ou représentant la situation de conduite et/ou l'état de conduite et une autre grandeur ($M_{cons}$, $P_{cons}$, FT) qui représente ou influence la demande de couple et/ou de puissance et/ou une caractéristique du conducteur,

   caractérisé en ce que
   pour déterminer le régime de consigne ($N_{mot,opt}$) du moteur (111) du véhicule, dans une première étape (1055), on définit un premier régime de consigne ($N_{mot, opt, FT}$)) en fonction d'autres grandeurs déterminées (FT) et on modifie ce premier régime de consigne ($N_{mot, opt, FT}$) dans une autre étape (1056) en fonction d'une autre grandeur (FS) représentant ou influençant la situation de conduite et/ou dans une étape (1057), on limite en fonction de la grandeur (FS) représentant ou influençant l'état de conduite.

2. Système selon la revendication 1, caractérisé en ce qu'
   on détermine la grandeur (FS) qui représente ou influence la situation de conduite, ou si on est en conduite en ville ou en conduite en accordéon ou en conduite avec un patinage élevé (par exemple sur la glace ou la neige) un état de conduite sous charge élevée (par exemple en montagne) et/ou en descente et/ou on détermine la grandeur (FZ) représentant ou influençant l'état de conduite pour savoir si le moteur (111) est en phase de chauffage.

3. Système selon la revendication 1, caractérisé en ce qu'
   on détermine la demande de couple et/ou de puissance ($M_{cons}$, $P_{cons}$) selon la position de la pédale d'accélérateur (101) commandée par le conducteur et/ou selon l'état de fonctionnement détecté ($P_{NA}$) pour au moins un accessoire entraîné par le moteur du véhicule (alternateur, compresseur de l'installation de climatisation).

4. Système selon la revendication 1, caractérisé en ce qu'
   on détecte une vitesse de rotation de sortie instantanée de la boîte de vitesses (112) représentant le régime de sortie ($N_{ab}$) et à partir du régime de consigne défini ($N_{mot,opt}$) du moteur (111) du véhicule et du régime de sortie détecté ($N_{ab}$), on détermine un rapport de boîte de vitesses de consigne (uopt) .

5. Système selon la revendication 4, caractérisé en ce que

   • dans la plage de fonctionnement dans laquelle la demande positive de couple et/ou de puissance ($M_{ab,cons}$) se trouve en dessous du couple maximum possible ($M_{ab,max}$) pour le rapport de transmission instantané (ureel) ou en dessous de la puissance maximale possible par le rapport de transmission instantané (mode de traction avec faible demande de couple), on règle le rapport de la boîte de vitesses ($u_{cons}$ de façon que le régime de consigne défini ($N_{mot,opt}$) du moteur reste essentiellement constant et on produit une modification de la demande de couple et/ou de puissance ($M_{ab,cons}$) essentiellement par une modification du couple moteur ($M_{E,cons}$), et/ou
   • dans une plage de fonctionnement dans laquelle la demande de couple et/ou de puissance positive détectée ($M_{ab,cons}$) se situe au-dessus du couple maximum possible pour le rapport de transmission instantané ($u_{reel}$) ou au-dessus de la puissance maximale possible ($M_{ab, max}$) pour le rapport de transmission instantané (mode de traction avec forte demande de couple), on augmente le rapport de transmission ($u_{cons}$) alors que le couple moteur ($M_{E,cons}$) est réglé essentiellement à la valeur maximale possible ($M_{ab,max}$) et/ou

- dans une plage de fonctionnement dans laquelle la demande de couple et/ou de puissance ($M_{ab,cons}$) négative détectée se situe au-dessus du couple minimum possible ($M_{ab,min}$) pour le rapport de transmission instantané (ureel) ou au-dessus de la puissance minimale possible pour le rapport de transmission instantané (mode de poussée avec faible demande négative de couple) on règle le rapport de la boîte de vitesses ($u_{cons}$) pour que le régime de consigne défini ($N_{mot,\,opt}$) du moteur reste essentiellement constant et on effectue une modification de la demande de couple et/ou de puissance ($M_{ab,cons}$) essentiellement par une modification du couple moteur ($M_{E,cons}$) et/ou

- dans la plage de fonctionnement dans laquelle la demande de couple et/ou de puissance, négative, détectée ($M_{ab,cons}$) se situe en dessous du couple moteur minimum possible ($M_{ab,min}$) pour le rapport de boîte de vitesses instantané ($u_{reel}$), ou en dessous de la puissance minimale possible pour le rapport de boîte de vitesses instantané (mode de poussée avec demande de couple fortement négative), on règle le rapport de la transmission ($u_{cons}$) dans le sens du rapport minimum autorisé.

6. Système selon la revendication 4, caractérisé en ce que

- dans la plage de fonctionnement dans laquelle la demande de couple et/ou de puissance ($M_{ab,\,cons}$) positive détectée se situe en dessous du couple maximum possible ($M_{ab,max}$) pour le rapport de boîte de vitesses instantané ($u_{reel}$) ou en dessous de la puissance maximale possible pour le rapport de boîte de vitesses instantané (mode de traction avec faible demande de couple), on actionne le réglage ($u_{cons}$, de la démultiplication de la transmission en fonction du rapport de boîte de vitesses de consigne obtenu ($u_{opt}$) et/ou

- dans la plage de fonctionnement dans laquelle la demande de couple et de puissance négative détectée ($M_{ab,cons}$) se situe au-dessus du couple moteur minimum possible ($M_{ab,min}$) pour le rapport de boîte de vitesses instantané ($u_{reel}$) ou au-dessus de la puissance minimale possible du moteur pour le rapport de boîte de vitesses instantané (mode de poussée avec faible demande de couple négatif), on règle ($u_{cons}$) le rapport de la boîte de vitesses selon le rapport de consigne obtenu de la boîte de vitesses ($u_{opt}$).

7. Système selon la revendication 1, caractérisé en ce que la boîte de vitesses (112) présente des rapports dis-

crets ($G_i$) auxquels sont associées des plages de rapport ($I_i$) et on détermine dans quelle plage de rapport ($Ii$) se situe le rapport à régler (ucons) et en fonction de la plage de rapport ($I_i$) ainsi déterminée, on règle un rapport de boîte de vitesses ($G_i$).

8. Système selon la revendication 7, caractérisé en ce que les plages de rapports ($I_i$) ont une largeur choisie et la largeur dépend de la première grandeur déterminée (FZ, FS) et/ou d'une autre grandeur (FT) représentant les caractéristiques du conducteur.

EP 0 907 523 B1

# Fig. 1

**101** Fahrpedal / Kennfeld

**102** Fahr-Geschwindigkeits Regler

**103** Antriebs Schlupf Regelung

$P_{soll}$ $M_{soll}$

**104** Koordinator

**105** Bestimmung $N_{mot, opt}$

$P_{soll}$

$N_{mot, opt}$

$N_{ab}$

**106**

**107**

**110** Bestimmung Motorausgangs-Moment

$M_{ab, soll}$

**109** Bestimmung $u_{soll}$

$M_{ab, soll}$

$u_{opt}$

**108** Filterung (CVT) Diskretisierung (Stufenautom.)

$u_{soll}$

$M_{mot, soll}$

**111** Motor

**112** Getriebe

I/G

# Fig. 2

# Fig. 3

# Fig. 4

401 Start

402 Lese

$M_{ab,soll}$; $u_{opt}$;           $u_{ist}$; MGR;
$M_{ab,max}$; $M_{ab,min}$; $N_{mot,ist}$; $M_{E,max}$;
$u_{max}$;                    $M_{E,min}$;

403   $M_{ab,soll} < 0$ ?   N

J

404   $M_{ab,soll} \leq M_{ab,min}$ ?   N

405   $M_{ab,soll} \leq M_{ab,max}$ ?   N

J                    J

406 4. Fall    407 3. Fall    408 1. Fall    409 2. Fall

410 Ende

# Fig. 5a

Intervall bei

I1

eingelegtem
1. Gang

I2

eingelegtem
2. Gang

I3

eingelegtem
3. Gang

I4

eingelegtem
4. Gang

I5

eingelegtem
5. Gang

$u_{soll}$   3,6   2,4   1,6   1,0   0,75   N

Gi   1. Gang   2. Gang   3. Gang   4. Gang   5. Gang

# Fig. 5b

Intervall bei

I1

eingelegtem
1. Gang

I2

eingelegtem
2. Gang

I3

eingelegtem
3. Gang

I4

eingelegtem
4. Gang

I5

eingelegtem
5. Gang

$u_{soll}$   3,6   2,4   1,6   1,0   0,75   XE

Gi   1. Gang   2. Gang   3. Gang   4. Gang   5. Gang

# Fig. 5c

| | | | | | | | Intervall bei |
|---|---|---|---|---|---|---|---|

eingelegtem
1. Gang

eingelegtem
2. Gang

eingelegtem
3. Gang

eingelegtem
4. Gang

eingelegtem
5. Gang

$u_{soll}$    3,6    2,4    1,6    1,0    0,75    XS

Gi    1. Gang  2. Gang  3. Gang  4. Gang  5. Gang

# Fig. 5d

Intervall bei

eingelegtem
1. Gang

eingelegtem
2. Gang

eingelegtem
3. Gang

eingelegtem
4. Gang

eingelegtem
5. Gang

$u_{soll}$    3,6    2,4    1,6    1,0    0,75    XL

Gi    1. Gang  2. Gang  3. Gang  4. Gang  5. Gang